# EUROPEAN PATENT APPLICATION

(11) **EP 4 056 305 A1**
(43) Date of publication of application: **14.09.2022**
(21) Application number: 20883866.4
(22) Date of filing: 08.05.2020
(51) Int. Cl.: B23C 3/12, B23D 79/00, B23B 51/00

(54) **BEVELING CUTTER AND METHOD FOR BEVELING WORKPIECE**

(30) Priority: 06.11.2019 JP 2019201173
(71) Applicant: Xebec Technology Co., Ltd., Tokyo 102-0083 (JP)
(72) Inventor: SATO, Koji, Tokyo 102-0083 (JP); SATO, Yoichi, Tokyo 102-0083 (JP)
(74) Representative: Plougmann Vingtoft a/s
(86) International application number: PCT/JP2020/018620
(87) International publication number: WO 2021/090525

(57) **Abstract**

A beveling cutter (1) is provided in which a cutting blade (10) is composed of, when seen from an axial direction (X): an inner cutting blade portion (16) extending linearly toward a rear side R2 in a rotational direction R and toward the outer peripheral side; an outer cutting blade portion (17) extending linearly toward a forward side (R1) in the rotational direction (R) and toward the outer peripheral side on the radially outer side of the inner cutting blade portion (16); and a bending cutting blade portion (18) that connects the outer peripheral end of the inner cutting blade portion (16) with the inner peripheral end of the outer cutting blade portion (17). During a beveling operation, a cutting force vector (V1) applied from the inner cutting blade portion (16) to an edge portion (3) of a workpiece (2) and a cutting force vector (V2) applied from the outer cutting blade portion (17) to the edge portion (3) of the workpiece (2) are directed toward the center in the width direction of a bevel (5) formed by cutting. Formation of Poisson burr can thus be suppressed.

## Description

### Field

The present invention relates to a chamfering cutter to be attached to a machine tool to chamfer a workpiece, and a method of chamfering a workpiece.

### Background

A chamfering cutter is described in Patent Literature 1. The chamfering cutter in this literature includes a shaft connected to the head of a machine tool and a cone-shaped blade having cutting edges. The shaft and the blade are coaxial. Each of the cutting edges extends along a conical surface of the blade. The cutting edge extends linearly in the radial direction when the blade is viewed from the axial direction.

### Citation List

### Patent Literature

Patent Literature 1: Japanese Unexamined Patent Application Publication No. 2000-326130

### Summary

### Technical Problem

When the above chamfering cutter is moved in a direction orthogonal to the axis while rotating around the axis to chamfer a corner of a workpiece, Poisson burrs are likely to be formed.

In view of this, the problem of the present invention is to provide a chamfering cutter capable of suppressing formation of Poisson burrs, and a method of chamfering a workpiece.

### Solution to Problem

In order to solve the above problem, the present invention provides a chamfering cutter including a blade having a cutting edge and a shaft coaxial with the blade. The cutting edge is provided along a radial edge of the blade. The chamfering cutter rotates around the axis in a predetermined rotational direction to chamfer a corner of a workpiece.

When the blade is viewed from the axial direction, the cutting edge includes an inner cutting edge portion extending linearly to a rearward side of the rotational direction toward an outer peripheral side, and an outer cutting edge portion extending linearly to a forward side of the rotational direction toward the outer peripheral side on a radially outer side of the inner cutting edge portion.

According to the present invention, the cutting edge includes two cutting edge portions extending on the inner peripheral side and the outer peripheral side toward the forward side of the rotational direction when viewed from the axial direction. When a corner of a workpiece is chamfered by a cutting edge having such a shape, each of the cutting force applied to the corner of the workpiece from the inner cutting edge portion and the cutting force applied to the corner of the workpiece from the outer cutting edge portion has a vector directed toward the center in the width direction of a chamfer surface formed by cutting. The flow of chips produced by cutting is directed between the inner cutting edge portion and the outer cutting edge portion. As a result, formation of Poisson burrs at the edge of the chamfer surface formed by cutting can be suppressed.

In the present invention, the cutting edge may be inclined linearly toward the shaft toward the outer peripheral side when viewed from a direction orthogonal to the axis of the shaft. In this configuration, the chamfer surface formed at the corner of the workpiece by chamfering is an inclined surface corresponding to the inclination of the cutting edge.

In the present invention, the cutting edge may include a bent cutting edge portion located between an outer peripheral end of the inner cutting edge portion and an inner peripheral end of the outer cutting edge portion. In this configuration, the chamfering cutter has a V-shaped cutting edge.

In the present invention, the blade may include a chip discharge groove adjacent to the cutting edge on the forward side of the rotational direction, and the chip discharge groove may extend linearly in the axial direction. In this configuration, manufacturing the chamfering cutter is easy, compared with when the chip discharge groove is provided in a spiral around the axis L.

In the present invention, an inner peripheral end of the inner cutting edge portion and an outer peripheral end of the outer cutting edge portion may be at the same angular position around the axis.

In the present invention, a first angle at which the inner cutting edge portion is inclined to the rearward side with respect to a radial direction and a second angle at which the outer cutting edge portion is inclined to the forward side with respect to the radial direction may be 5° or more and 70° or less. In this configuration, the effect of suppressing formation of Poisson burrs can be achieved. Furthermore, the cutting edge can be easily provided in the blade.

In the present invention, the first angle may be greater than the second angle. In this configuration, formation of Poisson burrs can be easily suppressed at both edges in the width direction of the chamfer surface. Specifically, when the chamfering cutter is rotated, the peripheral speed of the outer cutting edge portion located on the outer peripheral side is higher than the peripheral speed of the inner cutting edge portion. The cutting force of the outer cutting edge portion is therefore higher than the cutting force of the inner cutting edge portion. As a result, in the workpiece, formation of Poisson burrs can be suppressed at one edge in the width direction of the chamfer surface chamfered by the outer cutting edge portion, compared with the other edge in the width direction of the chamfer surface chamfered by the inner cutting edge portion. In other words, the cutting force of the inner cutting edge portion is lower than the cutting force of the outer cutting edge portion. In the workpiece, therefore, Poisson burrs are likely to be formed at the other edge of the chamfer surface chamfered by the inner cutting edge portion, compared with one edge of the chamfer surface chamfered by the outer cutting edge portion. To address this situation, the first angle of the inner cutting edge portion is made larger than the second angle of the outer cutting edge portion, whereby the vector of the cutting force applied to the workpiece from the inner cutting edge portion is more directed toward the center in the width direction of the chamfer surface than the vector of the cutting force applied to the workpiece from the outer cutting edge portion. As a result, formation of Poisson burrs can be suppressed at the edge of the chamfer surface formed by cutting by the inner cutting edge portion.

In the present invention, the difference between the first angle and the second angle may be 2° or more and 10° or less. In this configuration, the bent cutting edge portion located between the inner cutting edge portion and the outer cutting edge portion in the radial direction is easily provided at a position close to a virtual circle that passes through the radial center of the cutting edge. Here, with the bent cutting edge portion provided at a position close to the virtual circle, both edges in the width direction of the ideal chamfer surface can be cut by the inner cutting edge portion and the outer cutting edge portion even when the corner of the workpiece is displaced in the direction orthogonal to the moving direction of the chamfering cutter. As a result, formation of Poisson burrs can be suppressed.

In the present invention, when the blade is viewed from a direction orthogonal to the axis, the cutting edge is inclined at 45° to the axis. In this configuration, the corner of the workpiece can be easily chamfered.

In the present invention, the outer peripheral end portion of the inner cutting edge portion and the inner peripheral end portion of the outer cutting edge portion may overlap when the cutting edge is viewed from a circumferential direction.

In the present invention, the cutting edge may include a bent cutting edge portion located between an outer peripheral end of the inner cutting edge portion and an inner peripheral end of the outer cutting edge portion in a radial direction and connecting the inner cutting edge portion and the outer cutting edge portion. The cutting edge may include a curved portion curved to the outer peripheral side toward the shaft when viewed from a direction orthogonal to the axis of the shaft. The bent cutting edge portion may be provided at the curved portion. In this configuration, the chamfer surface formed at the corner of the workpiece by chamfering is a curved surface corresponding to the shape of the curved portion of the cutting edge.

In the present invention, when viewed from a direction orthogonal to the axis of the shaft, the cutting edge includes a first portion extending linearly on the outer peripheral side toward the shaft, the curved portion curved from an end of the first portion on a side closer to the shaft, and a second portion extending linearly toward the shaft from an outer peripheral end of the curved portion toward the outer peripheral side. In this configuration, the curved portion can be easily provided in the cutting edge. Furthermore, in this configuration, the curved portion of the cutting edge can be easily brought into contact with the corner of the workpiece.

In the present invention, a first angle at which the inner cutting edge portion is inclined to the rearward side with respect to a radial direction and a second angle at which the outer cutting edge portion is inclined to the forward side with respect to the radial direction may be 5° or more and 85° or less. In this configuration, the effect of suppressing formation of Poisson burrs can be achieved. When the cutting edge includes a curved portion, the cutting edge is easily formed in the blade as long as the first angle and the second angle are equal to or smaller than 85°, although exceeding 70°.

The present invention provides a method of chamfering a workpiece, in which the chamfering cutter described above is brought into contact with a corner of a workpiece while being rotated around the axis and is moved in a direction intersecting the axis.

The chamfering method in the present invention can prevent or suppress formation of Poisson burrs on the chamfer surface formed along the moving direction of the chamfering cutter at the corner of the workpiece.

### Advantageous Effects of Invention

The cutting edge of the chamfering cutter in the present invention is substantially shaped like a letter V expanding toward the forward side of the rotational direction when viewed from the axial direction. When the corner of the workpiece is chamfered using the cutting edge having such a shape, formation of Poisson burrs at the edges of the chamfer surface formed by cutting can be suppressed.

### Brief Description of Drawings

FIG. 1 is an external view of a chamfering cutter in a first embodiment.
FIG. 2 is a plan view of the chamfering cutter in FIG. 1 when viewed from the blade.
FIG. 3 is an illustration of chamfering operation by the chamfering cutter in FIG. 1.
FIG. 4 is an illustration of the positional relation between the chamfering cutter and a corner of a workpiece.
FIG. 5 is an illustration of deviation in the positional relation between the chamfering cutter and a corner of a workpiece.
FIG. 6 is an illustration of chamfering operation by a chamfering cutter with an arc-shaped cutting edge.
FIG. 7 is a partial perspective view around the blade of the chamfering cutter in a modification.
FIG. 8 is an external view of a chamfering cutter in a second embodiment.
FIG. 9 is a plan view of the chamfering cutter in FIG. 8 when viewed from the blade.
FIG. 10 is an illustration of chamfering operation by the chamfering cutter in FIG. 8.

### Description of Embodiments

A chamfering cutter according to embodiments of the present invention will be described below with reference to the drawings.

### (First Embodiment)

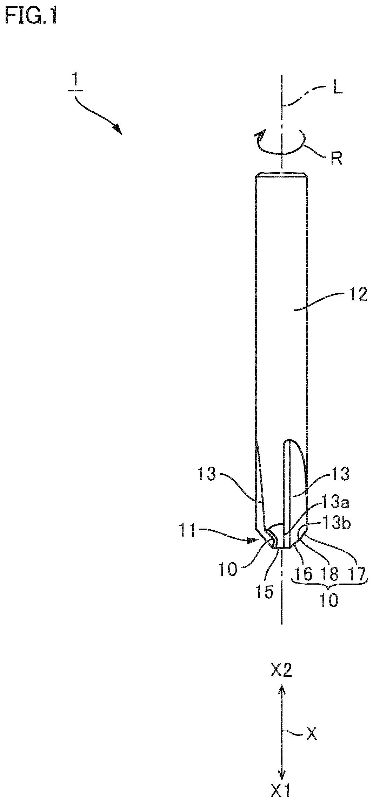

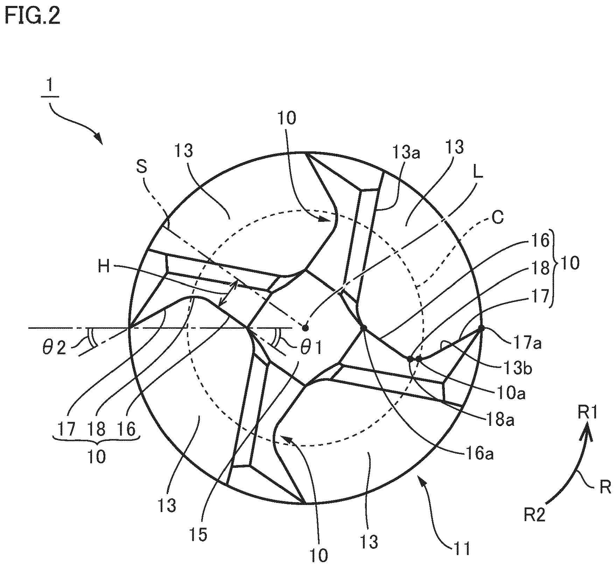

FIG. 1 is an external view of a chamfering cutter to which the present invention is applied. FIG. 2 is a plan view of the chamfering cutter when viewed from the blade. A chamfering cutter 1 in the present embodiment is a tool for chamfering a corner 3 of a workpiece 2. The workpiece 2 is, for example, a metal cast. The chamfering cutter 1 is coupled to the head of a not-illustrated machine tool for use. The chamfering cutter 1 is made of cemented carbide.

As illustrated in FIG. 1, the chamfering cutter 1 includes a blade 11 having cutting edges 10, and a shaft 12 coaxial with the blade 11. The cutting edges 10 are provided along the radially outer edge of the blade 11. The shaft 12 has a cylindrical shape. The shaft 12 is coupled to the head of a machine tool. The chamfering cutter 1 moves in a direction intersecting the axis L while rotating around the axis L of the shaft 12 in a predetermined rotational direction R to chamfer the corner 3 of the workpiece 2. In the following, the direction along the axis L of the shaft 12 is referred to as the axial direction X, the side on which the blade 11 is located in the axial direction X is referred to as the forward side X1, and the side on which the shaft 12 is located is referred to as the rearward side X2.

The blade 11 is provided to be continuous to the forward side X1 of the shaft 12. The blade 11 has a flat section 15 at the center of the forward end. When viewed from a direction orthogonal to the axis L, the radially outer edge of the blade 11 is inclined linearly toward the shaft 12 from the flat section 15 toward the outer peripheral side. The blade 11 therefore has a trapezoidal side shape that tapers from the distal end of the shaft 12 toward the forward side X1 when viewed from the direction orthogonal to the axis L. In this configuration, the cutting edge 10 provided along the radially outer edge of the blade 11 is inclined linearly toward the shaft 12 from the flat section 15 toward the outer peripheral side when viewed from the direction orthogonal to the axis L. As illustrated in FIG. 1, the cutting edge 10 is inclined at 45° to the axis L when viewed from the direction orthogonal to the axis L.

Here, the blade 11 has chip discharge grooves 13 adjacent to the cutting edges 10. Each of the chip discharge grooves 13 is located on the forward side R1 of the rotational direction R relative to the cutting edge 10. The chip discharge groove 13 extends parallel to the axis L on the outer peripheral side of the flat section 15. The chip discharge groove 13 extends linearly from the forward end of the blade 11 to reach the forward end portion of the shaft 12.

As illustrated in FIG. 2, the blade 11 has four cutting edges 10 at equiangular intervals around the axis L. The blade 11 therefore has four chip discharge grooves 13 at equiangular intervals around the axis L. Each of the chip discharge grooves 13 is open to the radially outer side. The opening edge of each chip discharge groove 13 in the blade 11 includes a forward opening edge portion 13a located on the forward side R1 of the rotational direction R and a rearward opening edge portion 13b located on the rearward side of the rotational direction R. Here, it can be said that the cutting edge 10 is provided at the rearward opening edge portion 13b.

Each of the cutting edges 10 extends in the axial direction X from the flat section 15 toward the outer peripheral side. When viewed from the axial direction X, the cutting edge 10 includes an inner cutting edge portion 16 extending linearly to the rearward side R2 of the rotational direction R toward the outer peripheral side, an outer cutting edge portion 17 extending linearly to the forward side R1 of the rotational direction R toward the outer peripheral side on the radially outer side of the inner cutting edge portion 16, and a bent cutting edge portion 18 located between the outer peripheral end of the inner cutting edge portion 16 and the inner peripheral end of the outer cutting edge portion 17. The bent cutting edge portion 18 is a portion that connects the outer peripheral end of the inner cutting edge portion 16 and the inner peripheral end of the outer cutting edge portion 17. The bent cutting edge portion 18 has an extremely small curvature. In other words, the bent cutting edge portion 18 is curved. The cutting edge 10 viewed from the axial direction X is substantially shaped like a letter V.

In the present embodiment, the inner cutting edge portion 16 is provided with a center height of dimension H. In other words, the inner cutting edge portion 16 is located to the forward side R1 of the rotational direction R by the dimension H when a virtual plane S parallel to the inner cutting edge portion 16 and encompassing the axis L is defined on the rearward side R2 of the rotational direction R of the inner cutting edge portion 16.

In the present embodiment, the inner peripheral end 16a of the inner cutting edge portion 16 and the outer peripheral end 17a of the outer cutting edge portion 17 are at the same angular position around the axis L. The first angle θ1 at which the inner cutting edge portion 16 is inclined to the rearward side X2 with respect to the radial direction and the second angle θ2 at which the outer cutting edge portion 17 is inclined to the forward side X1 with respect to the radial direction are 5° or more and 70° or less. More preferably, the first angle θ1 and the second angle θ2 are 25° or more and 45° or less. The first angle θ1 at which the inner cutting edge portion 16 is inclined is preferably greater than the second angle θ2 at which the outer cutting edge portion 17 is inclined. In the present embodiment, the first angle θ1 is 35.45° and the second angle θ2 is 30°. The difference between the first angle θ1 and the second angle θ2 is 5.45°. Furthermore, an inflection point 18a of the curved shape of the bent cutting edge portion 18 is located slightly on the inner peripheral side of a virtual circle C that passes through the center 10a of the cutting edge in the radial direction.

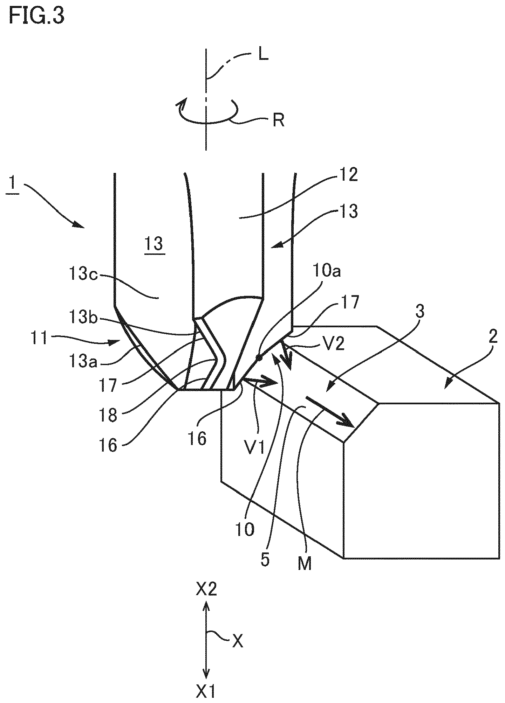

In the blade 11, the forward opening edge portion 13a of the chip discharge groove 13 facing the cutting edge 10 extends linearly to the forward side R1 of the rotational direction R from the flat section 15 toward the outer peripheral side when viewed from the axial direction X. The forward opening edge portion 13a of the chip discharge groove 13 facing the cutting edge 10 extends linearly in the axial direction X, as illustrated in FIG. 1. In the inner wall of the chip discharge groove 13, an inner wall portion 13c facing the cutting edge 10 is flat (see FIG. 3).

### (Chamfering Operation)

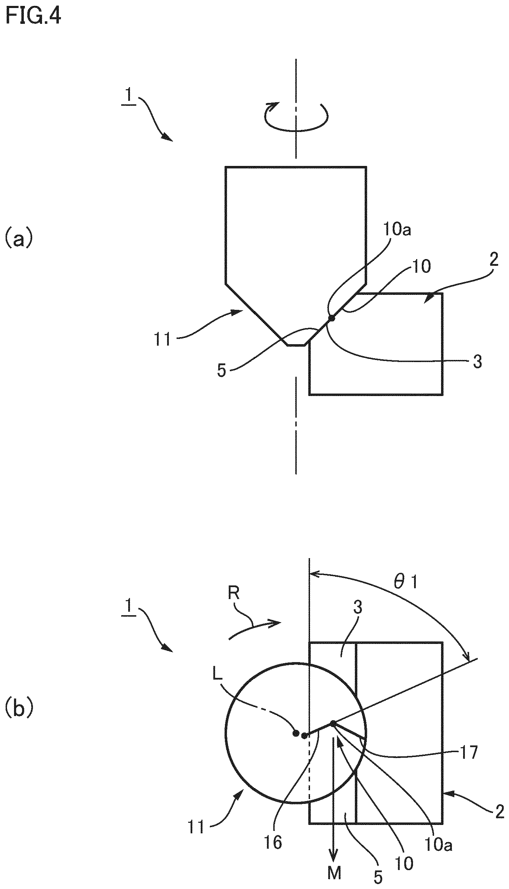

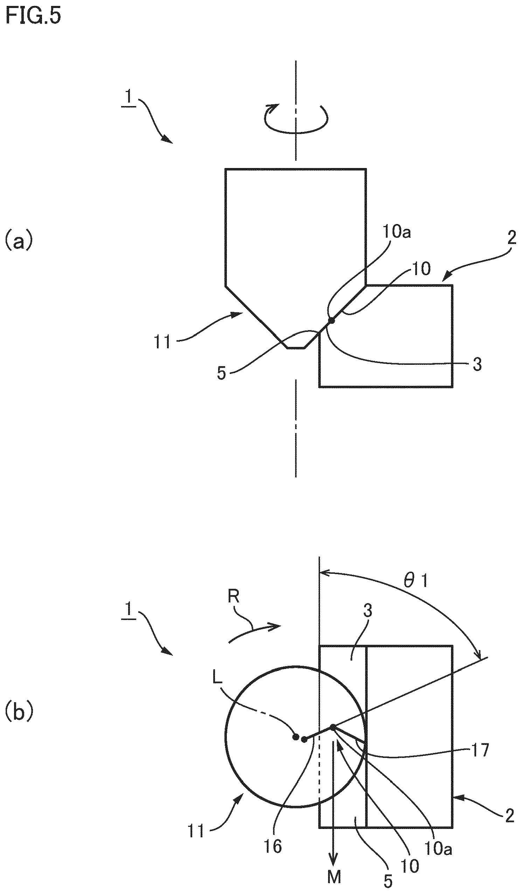

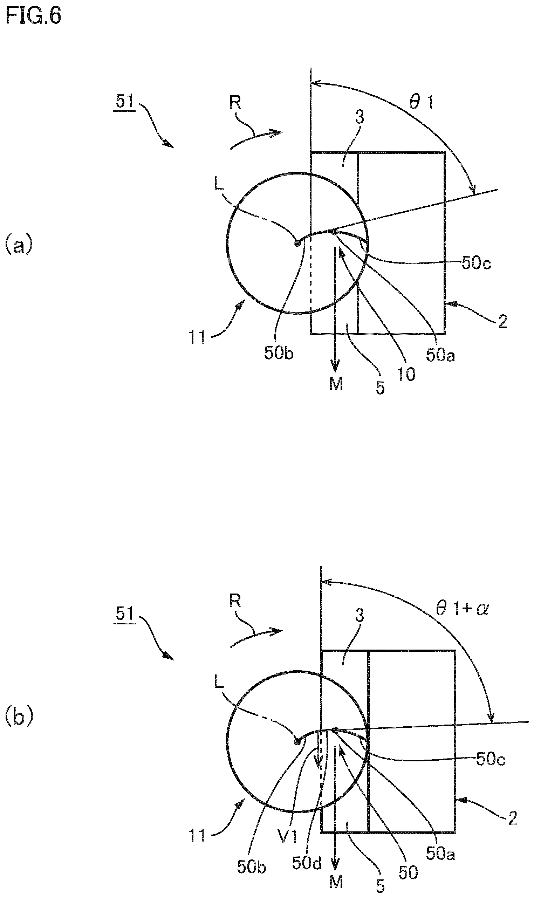

FIG. 3 is an illustration of the chamfering operation of chamfering the corner 3 of the workpiece 2. FIG. 4 is an illustration of the positional relation between the chamfering cutter 1 and the corner 3 of the workpiece 2 in the chamfering operation. FIG. 4(a) is a side view of the chamfering cutter 1 and the workpiece 2 when viewed from the direction orthogonal to the axis L. FIG. 4(b) is an illustration of a contact portion between the chamfering cutter 1 and the workpiece 2 when viewed from the axial direction X. FIG. 5 is an illustration of deviation in the positional relation between the chamfering cutter 1 and the corner 3 of the workpiece 2. FIG. 5(a) is a side view of the chamfering cutter 1 and the workpiece 2 when viewed from the direction orthogonal to the axis L, and FIG. 5(b) is an illustration of a contact portion between the chamfering cutter 1 and the workpiece 2 when viewed from the axial direction X. FIG. 6 is an illustration of the chamfering operation by a chamfering cutter of a comparative example having an arc-shaped cutting edge.

To perform the chamfering operation, the chamfering cutter 1 is connected to a machine tool and rotated around the axis L in a predetermined rotational direction R. Then, the blade 11 is brought into contact with the corner 3 of the workpiece 2, and the chamfering cutter 1 is moved in a moving direction M orthogonal to the axis L to form a chamfer surface 5.

To bring the blade 11 into contact with the corner 3 of the workpiece 2, first, an ideal chamfer surface 5 is set. Then, as illustrated in FIG. 4(a), the chamfering cutter 1 is placed so that the radial center 10a of the cutting edge 10 is located at the center in the width direction of the ideal chamfer surface 5. Then, the chamfering cutter 1 is moved in the moving direction M with the radial center 10a of the cutting edge 10 aligned with the center in the width direction of the ideal chamfer surface 5. As a result, a chamfer surface 5 extending in the moving direction M and inclined at the same angle as the angle at which the cutting edge 10 is inclined to the axis L is formed on the corner 3 of the workpiece 2.

Here, as illustrated in FIG. 4(b), in the chamfering cutter 1 in the present embodiment, when viewed from the axial direction X, the cutting edge 10 includes the inner cutting edge portion 16 extending linearly to the rearward side R2 of the rotational direction R toward the outer peripheral side, the outer cutting edge portion 17 extending linearly to the forward side R1 of the rotational direction R toward the outer peripheral side on the radially outer side of the inner cutting edge portion 16, and the bent cutting edge portion 18 connecting the outer peripheral end of the inner cutting edge portion 16 and the inner peripheral end of the outer cutting edge portion 17. When the cutting edge 10 having such shape moves in the direction intersecting the axis L while rotating around the axis L to chamfer the corner 3 of the workpiece 2, as illustrated in FIG. 3, a vector V1 of the cutting force applied to the corner 3 of the workpiece 2 from the inner cutting edge portion 16 and a vector V2 of the cutting force applied to the corner 3 of the workpiece 2 from the outer cutting edge portion 17 are directed toward the center in the width direction of the chamfer surface 5 formed by cutting. The flow of chips produced by cutting is directed toward the bent cutting edge portion 18 between the inner cutting edge portion 16 and the outer cutting edge portion 17. As a result, formation of Poisson burrs at the edges of the chamfer surface 5 formed by cutting can be suppressed.

In the chamfering cutter 1 in the present embodiment, when viewed from the axial direction X, the cutting edge 10 includes the inner cutting edge portion 16 extending linearly to the rearward side R2 of the rotational direction R toward the outer peripheral side, the outer cutting edge portion 17 extending linearly to the forward side R1 of the rotational direction R toward the outer peripheral side on the radially outer side of the inner cutting edge portion 16, and the bent cutting edge portion 18 connecting the outer peripheral end of the inner cutting edge portion 16 and the inner peripheral end of the outer cutting edge portion 17. This configuration enables the contact angle between the cutting edge 10 and the workpiece 2 to be kept even when the positional relation between the chamfering cutter 1 and the corner 3 of the workpiece 2 deviates in the direction orthogonal to the moving direction M.

More specifically, when the workpiece 2 is a cast, the corner 3 of the workpiece 2 held on a machine tool may be displaced in the direction orthogonal to the moving direction M of the chamfering cutter 1, due to a tolerance. In such a case, when the machine tool brings the blade 11 of the chamfering cutter 1 into contact with the workpiece 2, the radial center 10a of the cutting edge 10 is not aligned with the center in the width direction of the preset ideal chamfer surface 5. In the example illustrated in FIG. 5, compared with the state illustrated in FIG. 4, the radial center 10a of the cutting edge 10 is displaced downward in the inclination direction of the ideal chamfer surface 5. In other words, in the example illustrated in FIG. 5, the cutting edge 10 is in contact with the corner 3 of the workpiece 2 at a shallower depth than in the state illustrated in FIG. 4.

Even in such a case, in the chamfering cutter 1 in the present embodiment, since the inner cutting edge portion 16 and the outer cutting edge portion 17 extend linearly, the contact angle between the workpiece 2 and the cutting edge 10 is kept. In other words, even when the cutting edge 10 comes into contact with the corner 3 of the workpiece 2 at a shallow depth, the contact angle between the inner cutting edge portion 16 and the workpiece 2 is kept at the inclination angle θ1 at which the inner cutting edge portion 16 is inclined with respect to the radial direction, as illustrated in FIG. 4 and FIG. 5. As a result, the accuracy of chamfering (cutting) can be kept, and formation of Poisson burrs can be suppressed.

Such effects will now be described in more detail with a cutter of a comparative example. As illustrated in FIG. 6, a chamfering cutter 51 of a comparative example has a cutting edge 50 having an arc shape when viewed from the axial direction X. Although not illustrated in the drawings, the chamfering cutter 51 of the comparative example has a chip discharge groove 13 formed in a spiral around the axis L. The chamfering cutter 51 of the comparative example has a configuration similar to that of the chamfering cutter 1 in the present embodiment, except for the shape of the cutting edge 50 and the shape of the chip discharge groove 13.

To bring the chamfering cutter 51 of the comparative example into contact with the corner 3 of the workpiece 2, as illustrated in FIG. 6(a), first, an ideal chamfer surface 5 is set. Then, the chamfering cutter 51 is placed so that a radial center 50a of the cutting edge 50 is located at the center in the width direction of the ideal chamfer surface 5. The chamfering cutter 51 is moved in the moving direction M with the radial center 50a of the cutting edge 50 aligned with the center in the width direction of the ideal chamfer surface 5. As a result, a chamfer surface 5 extending in the moving direction M and inclined at the same angle as the angle at which the cutting edge 50 is inclined to the axis L is formed on the corner 3 of the workpiece 2.

Here, in the chamfering cutter 51 of the comparative example, an inner peripheral end portion 50b of the cutting edge 50 is curved to the rearward side R2 of the rotational direction R toward the outer peripheral side. An outer peripheral end portion 50c of the cutting edge 50 is curved to the forward side R1 of the rotational direction R toward the outer peripheral side. Accordingly, the vector V1 of the cutting force applied to the corner 3 of the workpiece 2 from the inner peripheral end portion 50b of the cutting edge 50 and a vector V2 of the cutting force applied to the corner 3 of the workpiece 2 from the outer peripheral end portion 50c of the cutting edge 50 are directed toward the center in the width direction of the chamfer surface 5 formed by cutting, as in the chamfering cutter 1, in the same manner as in the chamfering cutter 1 illustrated in FIG. 3. The flow of chips produced by cutting is directed toward the bent cutting edge portion 18 between the inner cutting edge portion 16 and the outer cutting edge portion 17. Thus, formation of Poisson burrs at the edges of the chamfer surface 5 formed by cutting can be suppressed.

However, when the corner 3 of the workpiece 2 held on a machine tool is displaced in the direction orthogonal to the moving direction M of the chamfering cutter 51, the contact angle between the workpiece 2 and the cutting edge 50 fails to be kept. For example, as illustrated in FIG. 6(b), when the cutting edge 50 comes into contact with the corner 3 of the workpiece 2 at a shallow depth and the radial center 50a of the cutting edge 50 is displaced below the center of the ideal chamfer surface 5 in the inclination direction of the chamfer surface 5, the inner peripheral end portion 50b of the cutting edge 50 is not in contact the workpiece 2. Then, instead of the inner peripheral end portion 50b of the cutting edge 50, a central portion 50d of the cutting edge 50 comes into contact with the workpiece 2. Here, when the central portion 50d of the cutting edge 50 comes into contact with the corner 3 of the workpiece 2, the contact angle at which the central portion 50d of the cutting edge 50 is in contact with the workpiece 2 is a contact angle (θ1+α) deeper than the inclination angle θ1 of the inner peripheral end portion 50b of the cutting edge 50. As a result, a vector V1 of the cutting force applied to the corner 3 of the workpiece 2 from the central portion 50d of the cutting edge 50 is larger than when the inner peripheral end portion 50b of the blade 11 is in contact with the corner 3 of the workpiece 2. Furthermore, the direction of the vector V1 is toward the outside in the width direction of the chamfer surface 5, compared with when the inner peripheral end portion 50b of the blade 11 is in contact with the corner 3 of the workpiece 2. Then, the flow of chips produced by cutting is directed downward in the inclination direction of the chamfer surface 5 formed by cutting.

Consequently, in the chamfering cutter 51 of the comparative example, when the positional relation between the corner 3 of the workpiece 2 and the chamfering cutter 51 deviates from the preset positional relation, the accuracy of chamfering (cutting) varies, compared with when the chamfering cutter 1 is used. Furthermore, when the chamfering cutter 51 of the comparative example is used, Poisson burrs are likely to be formed when the positional relation between the corner 3 of the workpiece 2 and the chamfering cutter 51 deviates from the preset positional relation.

Here, in the present embodiment, the first angle θ1 of the inner cutting edge portion 16 and the second angle θ2 of the outer cutting edge portion 17 are 25° or more and 45° or less. With the first angle θ1 and the second angle θ2 within this range, the effect of suppressing formation of Poisson burrs is noticeable. Furthermore, with the first angle θ1 and the second angle θ2 within this range, the cutting edge 10 viewed from the axial direction X is substantially shaped like a letter V that is open 90° or more toward the forward side R1 of the rotational direction R. This configuration facilitates formation of the cutting edges 10 in the blade 11.

When the first angle θ1 of the inner cutting edge portion 16 and the second angle θ2 of the outer cutting edge portion 17 are 5° or more, the effect of suppressing formation of Poisson burrs can be achieved. In other words, when the first angle θ1 and the second angle θ2 are smaller than 5°, it is difficult to achieve the effect of suppressing formation of Poisson burrs. When the first angle θ1 of the inner cutting edge portion 16 and the second angle θ2 of the outer cutting edge portion 17 are 70° or less, the cutting edges 10 are easily formed in the blade 11. In other words, when the first angle θ1 and the second angle θ2 are greater than 70°, it is difficult to form the blade 11 in the blade 11. Here, when the cutting edge 10 has the first angle θ1 and the second angle θ2 both exceeding 45°, the formation of the cutting edge 10 is not easy compared with when the cutting edge 10 has the first angle θ1 and the second angle θ2 of 45° or less, but the formation of the cutting edge 10 can be facilitated by providing the bent cutting edge portion 18 having curvature and radially elongated.

In the present embodiment, the first angle θ1 at which the inner cutting edge portion 16 is inclined to the rearward side X2 with respect to the radial direction is greater than the second angle θ2 at which the outer cutting edge portion 17 is inclined to the forward side X1 with respect to the radial direction. Thus, formation of Poisson burrs can be suppressed at both edges in the width direction of the chamfer surface 5. Specifically, when the chamfering cutter 1 is rotated, the peripheral speed of the outer cutting edge portion 17 located on the outer peripheral side is higher than the peripheral speed of the inner cutting edge portion 16. The cutting force of the outer cutting edge portion 17 is therefore higher than the cutting force of the inner cutting edge portion 16. As a result, in the workpiece 2, formation of Poisson burrs can be suppressed at one edge in the width direction of the chamfer surface 5 chamfered by the outer cutting edge portion 17, compared with one edge in the width direction of the chamfer surface 5 chamfered by the inner cutting edge portion 16. In other words, the cutting force of the inner cutting edge portion 16 is lower than the cutting force of the outer cutting edge portion 17. In the workpiece 2, therefore, Poisson burrs are likely to be formed at the other edge in the width direction of the chamfer surface 5 chamfered by the inner cutting edge portion 16, compared with one edge in the width direction of the chamfer surface 5 chamfered by the outer cutting edge portion 17. To address this situation, in the present embodiment, the first angle θ1 of the inner cutting edge portion 16 is made larger than the second angle θ2 of the outer cutting edge portion 17. With this configuration, the vector V1 of the cutting force applied to the workpiece 2 from the inner cutting edge portion 16 can be more directed toward the center in the width direction of the chamfer surface 5 formed by cutting than the vector V2 of the cutting force applied to the workpiece 2 from the outer cutting edge portion 17. Thus, formation of Poisson burrs can also be suppressed at the edge of the chamfer surface 5 formed by cutting by the inner cutting edge portion 16.

In the present embodiment, the difference between the first angle θ1 and the second angle θ2 is 2° or more and 10° or less. Thus, the inflection point P of curvature of the bent cutting edge portion 18 located between the inner cutting edge portion 16 and the outer cutting edge portion 17 in the radial direction is easily provided at a position close to the virtual circle C that passes through the radial center 50a of the cutting edge 50. Here, with the inflection point P provided at a position close to the virtual circle C, both edges in the width direction of the ideal chamfer surface 55 can be cut by the inner cutting edge portion 16 and the outer cutting edge portion 17 even when the corner 3 of the workpiece 2 is displaced in the direction orthogonal to the moving direction M of the chamfering cutter 1. As a result, formation of Poisson burrs can be suppressed.

Furthermore, in the embodiment above, the bent cutting edge portion 18 connecting the inner cutting edge portion 16 and the outer cutting edge portion 17 has curvature, and the inflection point P of curvature of the bent cutting edge portion 18 is located on the inner peripheral side of the virtual circle C. Thus, the first angle θ1 of the inner cutting edge portion 16 can be easily made larger than the second angle θ2 of the outer cutting edge portion 17.

The shapes of the inner cutting edge portion 16, the outer cutting edge portion 17, and the bent cutting edge portion 18 may be set such that the inflection point P is located on the virtual circle C.

In the embodiment above, the bent cutting edge portion 18 has an arc shape having curvature when viewed from the axial direction X. However, the bent cutting edge portion 18 may be the intersection where the inner cutting edge portion 16 extending linearly and the outer cutting edge portion 17 extending linearly intersect each other. In other words, the cutting edge 10 may be shaped like a letter V where the inner cutting edge portion 16 and the outer cutting edge portion 17 intersect at a predetermined acute angle at the bent cutting edge portion 18.

Here, in the present embodiment, the chip discharge groove 13 extends linearly in the axial direction X. Thus, manufacturing the chamfering cutter 51 is easy, compared with when the chip discharge groove 13 is provided in a spiral around the axis L.

In the embodiment above, chamfering operation is performed by moving the chamfering cutter 51 in the direction intersecting the axis L. However, even when an opening edge of a hole in the workpiece 2 is chamfered by inserting the blade 11 into the hole in the workpiece 2, formation of Poisson burrs can be suppressed.

### (Modifications)

In the embodiment above, the blade 11 has the flat section 15 at the center of the forward end. However, the blade 11 does not necessarily have the flat section 15. Specifically, the blade 11 may have a conical section that tapers toward the forward side X1, instead of the flat section 15. This conical section may have a second cutting edge different from the cutting edges 10 described above.

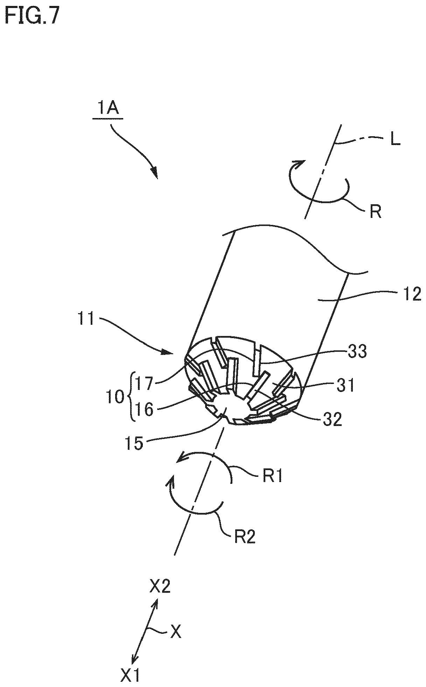

FIG. 7 is a partial perspective view around the blade 11 of the chamfering cutter in a modification. A chamfering cutter 1A in this modification has a configuration corresponding to the chamfering cutter 1 described above, and the corresponding configuration is denoted by the same sign and will not be further elaborated.

As illustrated in FIG. 7, the chamfering cutter 1A has a blade 11 having a truncated conical shape on the forward side X1 of the shaft 12. In other words, the blade 11 has a flat section 15 at the center of the forward end. The blade 11 also has a tapered outer peripheral surface 31 having a diameter increasing from the flat section 15 toward the rearward side X2.

The forward end side of the tapered outer peripheral surface 31 has inner ribs 32 extending linearly to the rearward side R2 of the rotational direction R toward the outer peripheral side. In this modification, eight inner ribs 32 are provided at equiangular intervals. Each of the inner ribs 32 has a rectangular shape in cross section. The tapered outer peripheral surface 31 also has outer ribs 33 on the radially outer side of the inner ribs 32. Each of the outer ribs 33 extends linearly to the forward side R1 of the rotational direction R toward the outer peripheral side. Eight of the outer ribs 33 are provided at equiangular intervals. Each of the outer ribs 33 has a rectangular shape in cross section. The outer peripheral end portion of the inner rib 32 and the inner peripheral end portion of the outer rib 33 overlap when viewed from the circumferential direction. In other words, the outer peripheral end portion of the inner rib 32 protrudes toward the outer peripheral side relative to the inner peripheral end of the outer rib 33.

The inner cutting edge portion 16 of the cutting edge 10 is provided at the corner located on the forward side R1 of the rotational direction R on the outer peripheral side of the inner rib 32. The outer cutting edge portion 17 of the cutting edge 10 is provided at the corner located on the forward side R1 of the rotational direction R on the outer peripheral side of the outer rib 33. The inner cutting edge portion 16 extends linearly to the rearward side R2 of the rotational direction R toward the outer peripheral side. The outer cutting edge portion 17 extends linearly to the forward side R1 of the rotational direction R toward the outer peripheral side on the radially outer side of the inner cutting edge portion 16. The outer peripheral end portion of the inner cutting edge portion 16 and the inner peripheral end portion of the outer cutting edge portion 17 overlap when viewed from the circumferential direction. In other words, the outer peripheral end portion of the inner cutting edge portion 16 protrudes toward the outer peripheral side relative to the inner peripheral end of the outer cutting edge portion 17.

The chamfering cutter 1A in this modification also achieves the same operation and effect as the chamfering cutter 1 described above.

### (Second Embodiment)

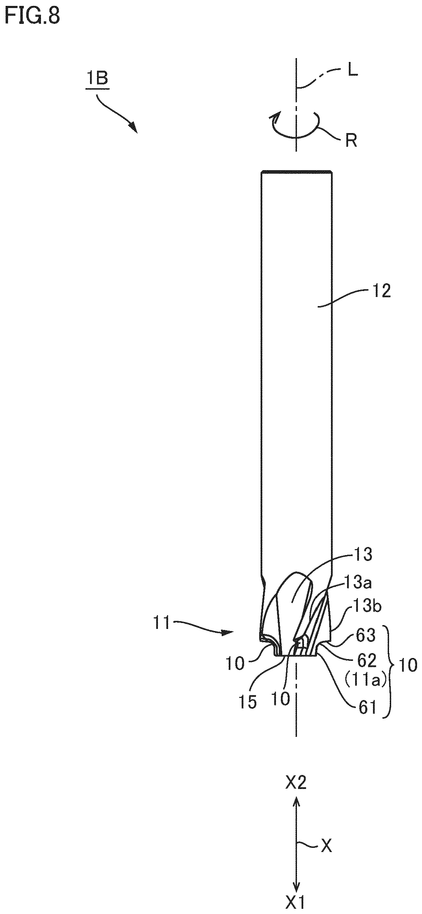

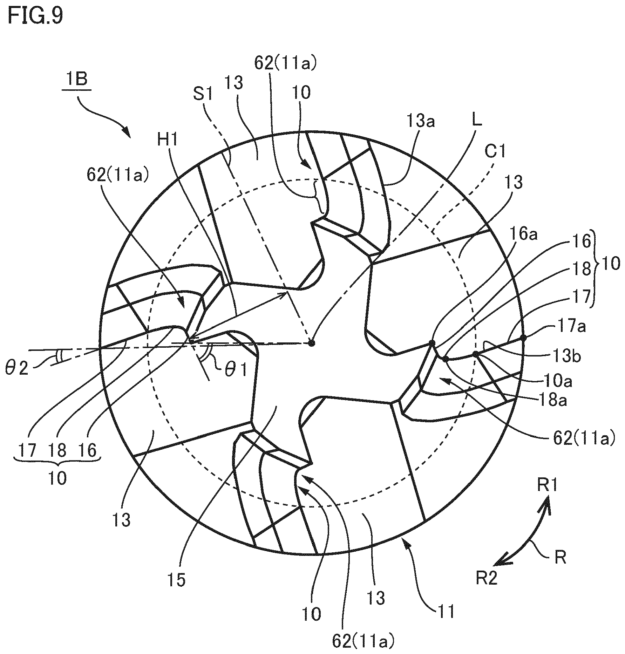

FIG. 8 is an external view of a chamfering cutter in a second embodiment. FIG. 9 is a plan view of the chamfering cutter in FIG. 8 when viewed from the blade. The chamfering cutter 1B in the second embodiment has a configuration corresponding to the chamfering cutter 1 described above, and the corresponding configuration is denoted by the same sign and will not be further elaborated.

As illustrated in FIG. 8, the chamfering cutter 1B includes a blade 11 having cutting edges 10, and a shaft 12 coaxial with the blade 11. The cutting edges 10 are provided along the radially outer edge of the blade 11. The shaft 12 has a cylindrical shape. The shaft 12 is coupled to the head of a machine tool. The chamfering cutter 1B moves in a direction intersecting the axis L while rotating around the axis L of the shaft 12 in a predetermined rotational direction R to chamfer the corner 3 of the workpiece 2.

The blade 11 is provided to be continuous to the forward side X1 of the shaft 12. The blade 11 has a flat section 15 at the center of the forward end. The blade 11 also has a blade curved portion 11a at which the radially outer edge is curved to the outer peripheral side toward the second direction X2 (toward the shaft 12) when viewed from a direction orthogonal to the axis L. In this configuration, when viewed from the direction orthogonal to the axis of the shaft 12, the cutting edge 10 provided along the radially outer edge of the blade 11 has a first portion 61 extending linearly on the outer peripheral side from the outer peripheral end of the flat section 15 toward the second direction X2, a curved portion 62 curved to the outer peripheral side from the end in the second direction X2 of the first portion 61 toward the second direction X2, and a second portion 63 extending linearly in the second direction X2 from the outer peripheral end of the curved portion 62 toward the outer peripheral side. The end in the second direction X2 of the first portion 61 is continuous to the curved portion 62 with no steps. The curved portion 62 is continuous to the inner peripheral end of the second portion 63 with no steps.

The blade 11 also has chip discharge grooves 13 adjacent to the cutting edges 10. Each of the chip discharge grooves 13 is located on the forward side R1 of the rotational direction R relative to the cutting edge 10. In the present embodiment, the blade 11 has four cutting edges 10 at equiangular intervals around the axis L. The blade 11 therefore has four chip discharge grooves 13 at equiangular intervals around the axis L. Each of the chip discharge grooves 13 is open to the radially outer side. The opening edge of each chip discharge groove 13 in the blade 11 includes a forward opening edge portion 13a located on the forward side R1 of the rotational direction R and a rearward opening edge portion 13b located on the rearward side of the rotational direction R. Here, it can be said that the cutting edge 10 is provided at the rearward opening edge portion 13b.

As illustrated in FIG. 9, when viewed from the axial direction X, each cutting edge 10 includes an inner cutting edge portion 16 extending linearly to the rearward side R2 of the rotational direction R toward the outer peripheral side, an outer cutting edge portion 17 extending linearly to the forward side R1 of the rotational direction R toward the outer peripheral side on the radially outer side of the inner cutting edge portion 16, and a bent cutting edge portion 18 located between the outer peripheral end of the inner cutting edge portion 16 and the inner peripheral end of the outer cutting edge portion 17. The bent cutting edge portion 18 is a portion that connects the outer peripheral end of the inner cutting edge portion 16 and the inner peripheral end of the outer cutting edge portion 17. The bent cutting edge portion 18 is curved. The bent cutting edge portion 18 is depressed to the rearward side R2 of the rotational direction R.

The inner cutting edge portion 16 is provided with a center height of dimension H1. In other words, the inner cutting edge portion 16 is located to the forward side R1 of the rotational direction R by the dimension H1 when a virtual plane S1 parallel to the inner cutting edge portion 16 and encompassing the axis L is defined on the rearward side R2 of the rotational direction R of the inner cutting edge portion 16. The bent cutting edge portion 18 is provided at the curved portion 62. In other words, the bent cutting edge portion 18 is provided to completely overlap the curved portion 62 or is provided on the inside of the curved portion 62. The bent cutting edge portion 18 is therefore located between the first portion 61 and the second direction X2 in the axial direction X when viewed from the direction orthogonal to the axis.

In the present embodiment, the bent cutting edge portion 18 completely overlaps the curved portion 62. Thus, the portion (curved portion) of the cutting edge 10 that is curved to the outer peripheral side toward the second direction X2 when viewed from the direction orthogonal to the axis L is curved to the rearward side R2 of the rotational direction R when viewed from the axial direction X. The inner cutting edge portion 16 completely overlaps the first portion 61, and the outer cutting edge portion 17 completely overlaps the second portion 63. Thus, the portion (inner cutting edge portion 16) of the cutting edge 10 that extends linearly to the rearward side R2 of the rotational direction R toward the outer peripheral side when viewed from the direction orthogonal to the axis L extends linearly on the outer peripheral side toward the second direction X2 when viewed from the axial direction X. Furthermore, the portion (outer cutting edge portion 17) of the cutting edge 10 that extends linearly to the forward side R1 of the rotational direction R toward the outer peripheral side when viewed from the direction orthogonal to the axis L extends linearly in the second direction X2 toward the outer peripheral side when viewed from the axial direction X.

Here, when the inner peripheral end 16a of the inner cutting edge portion 16 and the outer peripheral end 17a of the outer cutting edge portion 17 are compared, the outer peripheral end 17a of the outer cutting edge portion 17 is located on the forward side R1 of the rotational direction R. The first angle θ1 at which the inner cutting edge portion 16 is inclined to the rearward side X2 with respect to the radial direction and the second angle θ2 at which the outer cutting edge portion 17 is inclined to the forward side X1 with respect to the radial direction are 5° or more and 85° or less. Here, the first angle θ1 at which the inner cutting edge portion 16 is inclined is preferably greater than the second angle θ2 at which the outer cutting edge portion 17 is inclined. In the present embodiment, the first angle θ1 is 79° and the second angle θ2 is 19°. The difference between the first angle θ1 and the second angle θ2 is 60°. Furthermore, the inflection point 18a of the curved shape of the bent cutting edge portion 18 is located on the inner peripheral side of a virtual circle C1 that passes through the center 10a of the cutting edge 10 in the radial direction. The inner peripheral end 16a of the inner cutting edge portion 16 and the outer peripheral end 17a of the outer cutting edge portion 17 may be at the same angular position around the axis L.

The present embodiment can also achieve the effect of suppressing formation of Poisson burrs when the first angle θ1 of the inner cutting edge portion 16 and the second angle θ2 of the outer cutting edge portion 17 are 5° or more. In other words, when the first angle θ1 and the second angle θ2 are smaller than 5°, it is difficult to achieve the effect of suppressing formation of Poisson burrs. When the first angle θ1 of the inner cutting edge portion 16 and the second angle θ2 of the outer cutting edge portion 17 are 85° or less, the cutting edges 10 are easily formed in the blade 11. Here, in the present embodiment, the inner cutting edge portion 16 and the outer cutting edge portion 17 are not provided on the same plane, unlike the cutting edge 10 of the chamfering cutter 1 in the first embodiment. This configuration facilitates provision of the cutting edges 10 in the blade 11 even when the first angle θ1 and the second angle θ2 exceed 70°. In the present embodiment, the bent cutting edge portion 18 and the curved portion 62 overlap, and the curvature of the bent cutting edge portion 18 is large, compared with the chamfering cutter 1 in the first embodiment. In the present embodiment, this configuration also facilitates provision of the cutting edges 10 in the blade 11 even when the first angle θ1 and the second angle θ2 exceed 70°.

### (Chamfering Operation)

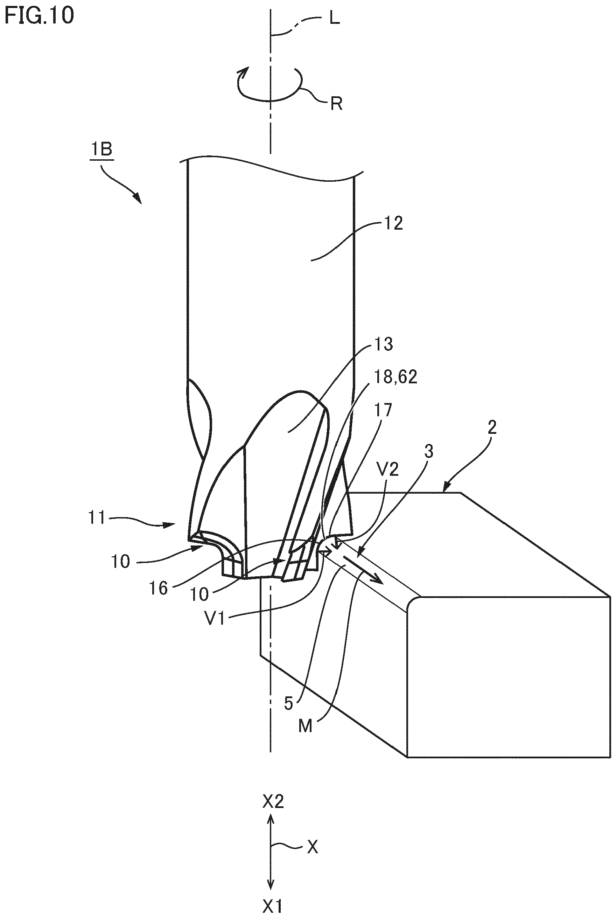

FIG. 10 is an illustration of the chamfering operation of chamfering the corner 3 of the workpiece 2 by the chamfering cutter 1B. To perform the chamfering operation, the chamfering cutter 1B is connected to a machine tool and rotated around the axis L in a predetermined rotational direction R. Then, the curved portion 62 of the blade 11 is brought into contact with the corner 3 of the workpiece 2, and the chamfering cutter 1B is moved in the moving direction M orthogonal to the axis L to form a chamfer surface 5. As a result, the chamfer surface 5 extending in the moving direction M and having a curved shape transferred from the curved portion 62 is formed on the corner 3 of the workpiece 2.

Here, in the chamfering cutter 1B in the present embodiment, when viewed from the axial direction X, the cutting edge 10 includes the inner cutting edge portion 16 extending linearly to the rearward side R2 of the rotational direction R toward the outer peripheral side, the outer cutting edge portion 17 extending linearly to the forward side R1 of the rotational direction R toward the outer peripheral side on the radially outer side of the inner cutting edge portion 16, and the bent cutting edge portion 18 connecting the outer peripheral end of the inner cutting edge portion 16 and the inner peripheral end of the outer cutting edge portion 17, in the same manner as in FIG. 4(b). Thus, as illustrated in FIG. 10, a vector V1 of the cutting force applied to the corner 3 of the workpiece 2 from the inner peripheral end portion of the bent cutting edge portion 18 and the inner cutting edge portion 16 and a vector V2 of the cutting force applied to the corner 3 of the workpiece 2 from the outer peripheral end portion of the bent cutting edge portion 18 and the outer cutting edge portion 17 are directed toward the center in the width direction of the chamfer surface 5 formed by cutting. The flow of chips produced by cutting is directed toward the bent cutting edge portion 18 between the inner cutting edge portion 16 and the outer cutting edge portion 17. As a result, formation of Poisson burrs at the edges of the chamfer surface 5 formed by cutting can be suppressed.

In the chamfering cutter 1B in the present embodiment, when viewed from the axial direction X, the cutting edge 10 has the inner cutting edge portion 16 extending linearly to the rearward side R2 of the rotational direction R toward the outer peripheral side, the outer cutting edge portion 17 extending linearly to the forward side R1 of the rotational direction R toward the outer peripheral side on the radially outer side of the inner cutting edge portion 16, and the bent cutting edge portion 18 connecting the outer peripheral end of the inner cutting edge portion 16 and the inner peripheral end of the outer cutting edge portion 17. This configuration enables the contact angle between the cutting edge 10 and the workpiece 2 to be kept even when the positional relation between the chamfering cutter 1B and the corner 3 of the workpiece 2 deviates in the direction orthogonal to the moving direction M, in the same manner as in FIG. 5(b).

Furthermore, in the present embodiment, the first angle θ1 at which the inner cutting edge portion 16 is inclined to the rearward side X2 with respect to the radial direction is greater than the second angle θ2 at which the outer cutting edge portion 17 is inclined to the forward side X1 with respect to the radial direction. Thus, even when the cutting force of the inner cutting edge portion 16 is smaller than the cutting force of the outer cutting edge portion 17 due to the peripheral speeds, the vector V1 of the cutting force applied to the workpiece 2 from the inner cutting edge portion 16 is more directed toward the center in the width direction of the chamfer surface 5 than the vector V2 of the cutting force applied to the workpiece 2 from the outer cutting edge portion 17. As a result, formation of Poisson burrs can also be suppressed at the edge of the chamfer surface 5 formed by cutting by the inner cutting edge portion 16.

## Claims

1. A chamfering cutter comprising a blade having a cutting edge and a shaft coaxial with the blade, the cutting edge being provided along a radial edge of the blade, the chamfering cutter rotating around an axis of the shaft in a predetermined rotational direction to chamfer a corner of a workpiece, wherein when the blade is viewed from the axial direction, the cutting edge comprises an inner cutting edge portion extending linearly to a rearward side of the rotational direction toward an outer peripheral side, and an outer cutting edge portion extending linearly to a forward side of the rotational direction toward the outer peripheral side on a radially outer side of the inner cutting edge portion.

2. The chamfering cutter according to claim 1, wherein when viewed from a direction orthogonal to the axis of the shaft, the cutting edge is inclined linearly toward the shaft toward the outer peripheral side.

3. The chamfering cutter according to claim 2, wherein the cutting edge comprises a bent cutting edge portion located between an outer peripheral end of the inner cutting edge portion and an inner peripheral end of the outer cutting edge portion.

4. The chamfering cutter according to claim 2, wherein
the blade has a chip discharge groove adjacent to the cutting edge on a forward side of the rotational direction, and
the chip discharge groove extends linearly in the axial direction.

5. The chamfering cutter according to claim 2, wherein an inner peripheral end of the inner cutting edge portion and an outer peripheral end of the outer cutting edge portion are at the same angular position around the axis.

6. The chamfering cutter according to claim 2, wherein a first angle at which the inner cutting edge portion is inclined to the rearward side with respect to a radial direction and a second angle at which the outer cutting edge portion is inclined to the forward side with respect to the radial direction are 5° or more and 70° or less.

7. The chamfering cutter according to claim 6, wherein the first angle is greater than the second angle.

8. The chamfering cutter according to claim 7, wherein a difference between the first angle and the second angle is 2° or more and 10° or less.

9. The chamfering cutter according to claim 2, wherein when the blade is viewed from a direction orthogonal to the axis, the cutting edge is inclined at 45° to the axis.

10. The chamfering cutter according to claim 2, wherein the cutting edge includes a bent cutting edge portion located between an outer peripheral end of the inner cutting edge portion and an inner peripheral end of the outer cutting edge portion in a radial direction and connecting the inner cutting edge portion and the outer cutting edge portion, and wherein the cutting edge includes a curved portion curved to the outer peripheral side toward the shaft when viewed from a direction orthogonal to the axis of the shaft, and wherein the bent cutting edge portion is provided at the curved portion.

11. The chamfering cutter according to claim 2, wherein when viewed from a direction orthogonal to the axis of the shaft, the blade comprises a curved portion curved to the outer peripheral side toward the shaft, and the bent cutting edge portion is provided at the curved portion.

12. The chamfering cutter according to claim 11, wherein when viewed from a direction orthogonal to the axis of the shaft, the cutting edge comprises a first portion extending linearly on the outer peripheral side toward the shaft, the curved portion curved from an end of the first portion on a side closer to the shaft, and a second portion extending linearly toward the shaft from an outer peripheral end of the curved portion toward the outer peripheral side.

13. The chamfering cutter according to claim 11, wherein a first angle at which the inner cutting edge portion is inclined to the rearward side with respect to a radial direction and a second angle at which the outer cutting edge portion is inclined to the forward side with respect to the radial direction are 5° or more and 85° or less.

14. The chamfering cutter according to claim 13, wherein the first angle is greater than the second angle.

15. A method of chamfering a workpiece, wherein the chamfering cutter according to claim 1 is brought into contact with a corner of a workpiece while being rotated around the axis and is moved in a direction intersecting the axis.

## Amended claims

### Amended claims under Art. 19.1 PCT

1. [Amended] A chamfering cutter comprising a blade having a cutting edge and a shaft coaxial with the blade, the cutting edge being provided along a radial edge of the blade, the chamfering cutter rotating around an axis of the shaft in a predetermined rotational direction to chamfer a corner of a workpiece, wherein when the blade is viewed from the axial direction, the cutting edge comprises an inner cutting edge portion extending linearly to a rearward side of the rotational direction toward an outer peripheral side, and an outer cutting edge portion extending linearly to a forward side of the rotational direction toward the outer peripheral side on a radially outer side of the inner cutting edge portion, wherein
the cutting edge comprises a bent cutting edge portion located between an outer peripheral end of the inner cutting edge portion and an inner peripheral end of the outer cutting edge portion.

2. The chamfering cutter according to claim 1, wherein when viewed from a direction orthogonal to the axis of the shaft, the cutting edge is inclined linearly toward the shaft toward the outer peripheral side.

3. [Deleted]

4. The chamfering cutter according to claim 2, wherein
the blade has a chip discharge groove adjacent to the cutting edge on a forward side of the rotational direction, and
the chip discharge groove extends linearly in the axial direction.

5. The chamfering cutter according to claim 2, wherein an inner peripheral end of the inner cutting edge portion and an outer peripheral end of the outer cutting edge portion are at the same angular position around the axis.

6. The chamfering cutter according to claim 2, wherein a first angle at which the inner cutting edge portion is inclined to the rearward side with respect to a radial direction and a second angle at which the outer cutting edge portion is inclined to the forward side with respect to the radial direction are 5° or more and 70° or less .

7. The chamfering cutter according to claim 6, wherein the first angle is greater than the second angle.

8. The chamfering cutter according to claim 7, wherein a difference between the first angle and the second angle is 2° or more and 10° or less.

9. The chamfering cutter according to claim 2, wherein when the blade is viewed from a direction orthogonal to the axis, the cutting edge is inclined at 45° to the axis.

10. The chamfering cutter according to claim 1, wherein an outer peripheral end portion of the inner cutting edge portion and an inner peripheral end portion of the outer cutting edge portion overlap when the cutting edge is viewed from a circumferential direction.

11. [Amended] The chamfering cutter according to claim 2, wherein when viewed from a direction orthogonal to the axis of the shaft, the blade comprises a curved portion curved to the outer peripheral side toward the shaft, and the bent cutting edge portion is provided at the curved portion.

12. The chamfering cutter according to claim 11, wherein when viewed from a direction orthogonal to the axis of the shaft, the cutting edge comprises a first portion extending linearly on the outer peripheral side toward the shaft, the curved portion curved from an end of the first portion on a side closer to the shaft, and a second portion extending linearly toward the shaft from an outer peripheral end of the curved portion toward the outer peripheral side.

13. The chamfering cutter according to claim 11, wherein a first angle at which the inner cutting edge portion is inclined to the rearward side with respect to a radial direction and a second angle at which the outer cutting edge portion is inclined to the forward side with respect to the radial direction are 5° or more and 85° or less .

14. The chamfering cutter according to claim 13, wherein the first angle is greater than the second angle.

15. A method of chamfering a workpiece, wherein the chamfering cutter according to claim 1 is brought into contact with a corner of a workpiece while being rotated around the axis and is moved in a direction intersecting the axis.
